Europäisches Patentamt

European Patent Office

Office européen des brevets

(19)

(11) Veröffentlichungsnummer: **0 047 224**
**A1**

(12) # EUROPÄISCHE PATENTANMELDUNG

(21) Anmeldenummer: 81730081.7

(51) Int. Cl.³: **G 01 K 17/06**

(22) Anmeldetag: 24.08.81

(30) Priorität: 22.08.80 DE 3032108

(43) Veröffentlichungstag der Anmeldung:
10.03.82 Patentblatt 82/10

(84) Benannte Vertragsstaaten:
BE IT

(71) Anmelder: Hampe, Andreas, Dr.-Ing.
Lotzestrasse 7
D-1000 Berlin 45(DE)

(72) Erfinder: Hampe, Andreas, Dr.-Ing.
Lotzestrasse 7
D-1000 Berlin 45(DE)

(74) Vertreter: Christiansen, Henning, Dipl.-Ing.
Unter den Eichen 108a
D-1000 Berlin 45(DE)

(54) Messanordnung zum Ermitteln der Wirksamkeit eines Wärmetauscherelements.

(57) Meßanordnung zum Ermitteln der Wirksamkeit eines zur Erdwärmegewinnung im Erdreich angeordneten Wärmetauscherelements, wobei eine in das Außenrohr (1) des Wärmetauscherelementes einschiebbare oder eingeschobene, in einem Abstand von dem Außenrohr geführte elektrische Heizvorrichtung (2), mindestens ein von der Heizvorrichtung thermisch getrennter Temperaturmeßfühler (5, 6) und eine Anzeige- oder Registriervorrichtung (9) für die Temperatur vorgesehen ist.

EP 0 047 224 A1

./...

Fig.1

- 1 -

Dr.-Ing. Andreas Hampe                    HP30.4-EU
D-1000 Berlin 45

---

Meßanordnung zum Ermitteln der Wirksamkeit eines
Wärmetauscherelements

---

B e s c h r e i b u n g

Die Erfindung betrifft eine Meßanordnung zum Ermitteln der
Wirksamkeit eines zur Erdwärmegewinnung im Erdreich angeordneten Wärmetauscherelements.

Bei derartigen im Erdreich angeordneten Wärmetauscherelementen ist es schwierig, für die Auslegung einer bestimm-

- 2 -

ten Wärmegewinnungsanlage die Wirkung der einzelnen Wärmetauscherelemente vorauszusagen, da die Parameter des Erdreichs sehr stark von der geographischen Lage abhängig sind.

Damit ist auch bei an sich baugleichen Wärmetauscherelementen die praktische Wirksamkeit eines einzelnen Elmentes im ins Erdreich eingebrachten Zustand nicht von vornherein vorherzusagen.

Die Kenntnis der Wirksamkeit der Wärmetauscherelemente ist insbesondere wichtig, um Anzahl, Länge und gegenseitigen Abstand der auf einem Grundstück für eine vorgegebene zu entnehmende Wärmeleistung zu installierenden Wärmetauscherelemente bestimmen zu können.

Versuche, die Wirksamkeit eines Wärmetauscherelements über die von diesem entnehmbare und nach Einschaltung einer Wärmepumpe zur Verfügung stehende Wärmemenge reproduzierbar zu messen, sind fehlgeschlagen. Eine derartige Anordnung wäre wegen des großen apparativen Aufwands auch nicht geeignet, um bei Installation einer Erdwärmegewinnungsanlage schnell und unkompliziert Aufschluß über deren zu erwartende Leistungsfähigkeit zu erhalten.

Der Erfindung liegt die Aufgabe zugrunde, eine Vorrichtung der oben angegebenen Art anzugeben, die im Rahmen der Einrichtung einer Erdgewinnungsanlage ohne besondere Schwierigkeit eingesetzt werden kann, d.h. kompakt aufgebaut ist, mit den üblichen auf einer Baustelle vorhandenen Leitungsanschlüssen betreibbar und unkompliziert bedienbar

- 3 -

ist. Die Meßergebnisse sollen dabei mit genügender Genauigkeit reproduzierbar sein.

Diese Aufgabe wird bei einem Gegenstand der eingangs genannten Gattung erfindungsgemäß gelöst durch eine in das Außenrohr des Wärmetauscherelementes einschiebbare oder eingeschobene, in einem Abstand von dem Außenrohr geführte elektrische Heizvorrichtung, mindestens einen von der Heizvorrichtung thermisch getrennten Temperaturmeßfühler und eine Anzeige- oder Registriervorrichtung für die Temperatur.

Die Erfindung beruht unter anderem auf der Erkenntnis, daß die Bodenverhältnisse auf einem üblichen Hausgrundstück genügend homogen sind, um von einer einzigen Meßstelle Rückschlüsse auf die Gesamtbeschaffenheit der örtlichen Bodenverhältnisse zu ziehen. Da Wärmetransportvorgänge grundsätzlich umkehrbar sind, kann die Reaktion eines Wärmetauschers bei einem Erdwärmegewinnungssystem wesentlich einfacher und besser beobachtet werden, wenn eine Wärmeabfuhr durch Beheizen erfolgt, als wenn über Kühlaggregate die bei der Wärmegewinnung tatsächlich ablaufenden Vorgänge simuliert werden müssen. Entsprechend den bei der Messung gestellten Anforderungen ist die Erfindung in unterschiedlichen Varianten ausführbar. Eine tiefenabhängige Wärmeübergangsmessung ist bei einer besonders einfach herstellbaren bevorzugten Ausführung ohne Umwälzung des Wärmetransportmediums möglich.

Obgleich es entsprechend der Erfindung grundsätzlich ausreichend ist, die Erwärmung des Wärmetransportmediums bei

- 4 -

konstanter Wärmeeinspeisung - ausgehend von einer Anfangstemperatur - zu beobachten, gestaltet sich die Messung für
den Nichtfachmann wesentlich einfacher, wenn die zum
Aufrechterhalten einer definierten Übertemperatur notwendige Heizleistung ermittelt wird, da in diesem Fall die
Messung von der bei längerfristiger Beheizung auftretenden
Erwärmung des umgebenden Erdreiches unbeeinflußt bleibt.

Als Meßvorrichtung für die zugeführte Heizleistung eignet
sich bevorzugt ein üblicher elektrischer Haushaltsstromzähler. Steht ein derartiger Zähler nicht zur Verfügung,
kann über geeignete Meßeinrichtungen auch das Verhältnis
der Ein- und Ausschaltzeiten eines Bimetallschalters durch
Zählvorrichtungen oder dergleichen zur Anzeige festgehalten werden.

Eine bevorzugte Auswertungsanordnung zur automatischen
Auswertung der mit der erfindungsgemäßen Meßvorrichtung
erzielten Ergebnisse zeichnet sich dadurch aus, daß der
Meßvorrichtung eine Auswertungseinrichtung für die zu
vorgegebenen Zeiten aufgenommenen Meßwerte in der Weise
nachgeschaltet ist, daß ein erster Speicher für die Folge
von Meßwerten vorgesehen sind, in denen Meßwerten entsprechende Signale festgehalten werden und daß die Folge von
Meßwerten entsprechenden Signalen mindestens mittelbar ein
Adress-Signal für einen zweiten Speicher bilden, das ein
Auswahlkriterium für ein anzuzeigendes Ergebnissignal
darstellt, wobei die Ergebnissignale bei den durch das
Adress-Signal bezeichneten Adressen in dem zweiten Speicher vorgegeben sind.

- 5 -

Bevorzugte Ausführungsbeispiele der Erfindung sind in den Zeichnungen dargestellt und werden nachfolgend näher beschrieben. Es zeigen:

Figur 1    ein erstes Ausführungsbeispiel der Erfindung in Schnittdarstellung, welches mit besonders wenig Bauelementen realisiert werden kann und zudem noch eine tiefenabhängige Messung ermöglicht,

Figur 2    ein weiteres Ausführungsbeispiel, welches eine elektrische Umwälzpumpe enthält sowie

Figur 3    eine Auswertungsanordnung zur automatischen Auswertung der mit der erfindungsgemäßen Meßanordnung erzielten Ergebnisse.

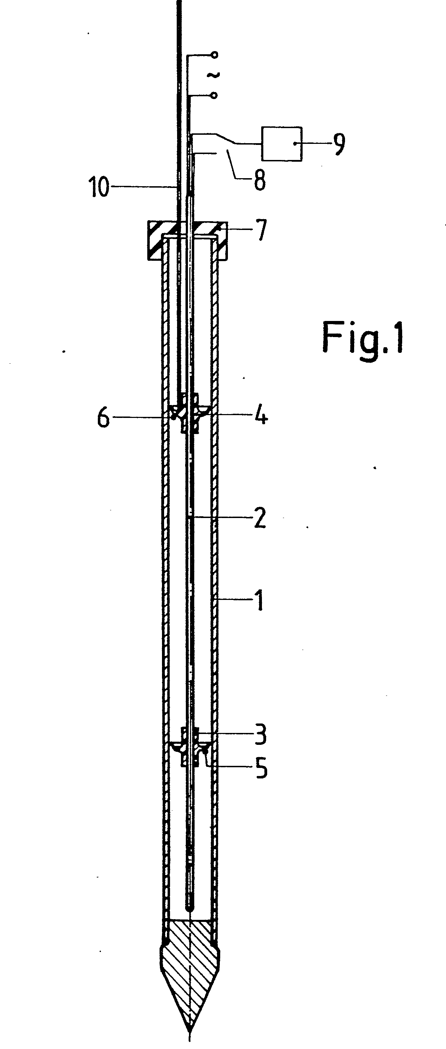

Das erste, in Figur 1 dargestellte, technisch besonders einfach herstellbare Ausführungsbeispiel ermöglicht eine tiefenabhängige Ermittlung der Wirksamkeit eines in die Erde eingebrachten Erdwärmetauscherelementes bzw. eine Aussage über die thermischen Parameter des entsprechenden Erdbereichs. Soll die Wirksamkeit eines Wärmetauschertyps unter den besonderen Gegebenheiten des Erdreichs in einem geographischen Anwendungsgebiet überprüft werden, so wird dessen Außenrohr 1 in das Erdreich eingebracht und die aus den übrigen, nachfolgend zu beschreibenden Elementen bestehende Meßanordnung zu Meßzwecken vorübergehend in das in die Erde eingebrachte Außenrohr eingefügt. Sollen hingegen die thermischen Parameter des Erdreichs allgemein bestimmt werden, so wird zum Zwecke der Messung ein Außenrohr 1, welches typische Eigenschaften aufweist, eingebracht, das nach der Messung wieder entfernt wird. Üblicherweise wird die Meßanordnung mitsamt einem derartigen typischen Außenrohr in den Handel gebracht, so daß beide Arten von Messungen durchgeführt werden können.

Die innere Meßanordnung weist ein zentrales, sich im wesentlichen über die gesamte Länge des Rohres 1 erstreckendes und wirksames Heizelement 2 auf, das durch elastische Zentrierstücke 3 und 4 in einer Entfernung von der Rohrwandung gehalten wird, welche bei in das Rohrinnere eingefüllter Wärmetransportflüssigkeit eine direkte Beeinflussung der Rohrwandung im wesentlichen verhindert. Aus Sicherheitsgründen wird das elektrische Heizelement mit Niederspannung betrieben.

Die Zentrierstücke 3 und 4 trennen bei einer bevorzugten Ausführungsvariante einzelne Rohrbereiche in vertikaler Richtung voneinander ab, um bei verringerter Konvektion Aussagen über den Wärmeübergang in einzelnen Rohrbereichen zu ermöglichen.

An den Zentrierstücken 3 und 4 sind in ihrem äußeren Bereich Temperaturfühler 5 bzw. 6 angebracht, die eine Aussage über die im Bereich der Rohrwandung vorhandene Temperatur ermöglichen. Die Zuführungsleitungen der Temperaturfühler 5 und 6 sind direkt mit dem Heizelement verbunden und werden durch eine Abschlußkappe 7, welche bevorzugt thermisch isolierend wirken kann, hindurchgeführt. Die Temperaturfühler sind innerhalb des Wärmetauscherelementes soweit von dem Heizelement 2 soweit entfernt angeordnet, daß eine direkte Beeinflussung ausgeschlossen ist.

- 7 -

Ein Meßstellenumschalter 8 erlaubt die Temperaturmessung für mehrere in verschiedenen Tiefen angebrachte Meßfühler über ein Meß- und Anzeigegerät 9. Bei einer bevorzugten Weiterbildung der Anordnung ist in diesem Gerät 9 eine Regelvorrichtung vorgesehen, welche die der Heizvorrichtung zugeführte elektrische Leistung so regelt, daß sich bei einem vorgegebenen Meßfühler eine konstante Temperatur einstellt. Die zum Aufrechterhalten der konstanten Temperatur zuzuführende Leistung, die einen Rückschluß auf den vorhandenen Wärmeübergang erlaubt, wird dabei ebenfalls angezeigt.

Eine Meßlatte 10, welche mit dem oberen Zentrierstück 4 verbunden ist und nach oben aus dem Außenrohr 1 des Wärmetauscherelements herausragt, ermöglicht bei einem verschiebbaren Zentrierstück eine Ermittlung des Ortes der Messung, so daß - wenn zur Verhinderung von Konvektion vorzugsweise der vorgesehene Meßbereich durch (nicht dargestellte) zusätzliche schottenartige Trennelemente vom übrigen Inneren des Wärmetauscherelementes abgetrennt ist - eine gezielte Ermittlung des Wärmeübergangs in Abhängigkeit von der Tiefe vorgenommen werden kann.

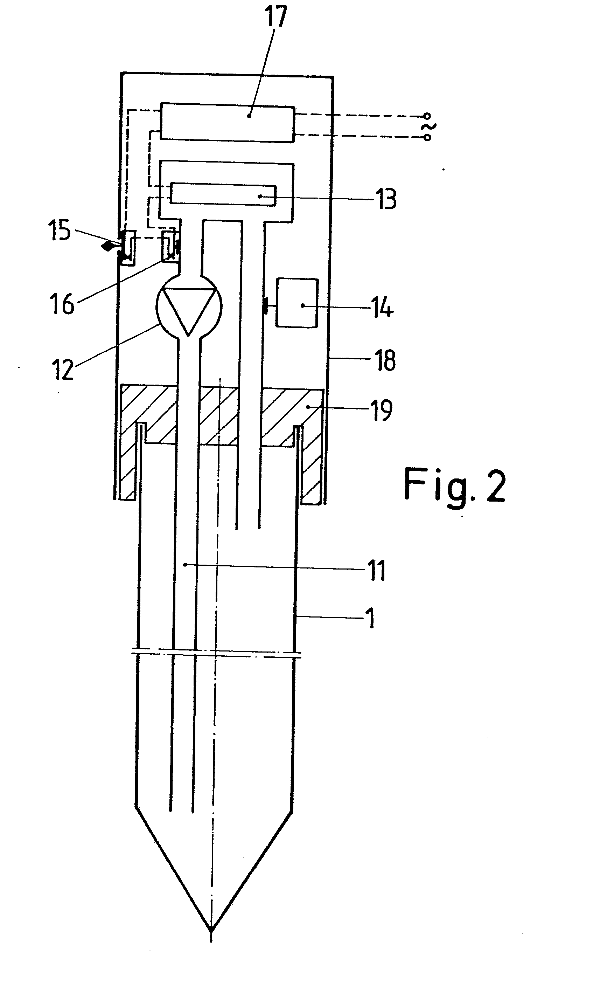

In Figur 2 ist eine weitere Meßanordnung dargestellt, welche eine Ermittlung des thermischen Verhaltens eines Wärmetauscherelementes und/oder des Erdreichs unter den dem tatsächlichen Betrieb einer Erdwärmegewinnungsvorrichtung sehr nahe kommenden Bedingungen ermöglicht.

Ein zu Prüfzwecken in das Erdreich eingebrachtes Außenrohr 1' eines Wärmetauscherelementes ist mit einem Wärme-

/8

- 8 -

transportmedium, wie es im späteren Betrieb des Wärmetauschers benutzt wird, also beispielsweise einer Salzsole, gefüllt. Die aufgesetze Meßanordnung besteht aus einem Innenrohr 11, durch das das Wärmetransportmedium über eine elektrische Umwälzpumpe 12 in einem geschlossenen Kreislauf hindurchgedrückt wird, wobei eine an das Stromnetz angeschlossene Beheizungsvorrichtung 13 vorgesehen ist.

Zum Ermitteln der Wirksamkeit des Wärmetauscherelementes wird zunächst bei abgeschalteter Heizung nach einiger Betriebszeit der Pumpe 12 die sich an einem Thermometer 14 einstellende Temperatur abgelesen. Anschließend wird über einen Schalter 15 die Heizung 13 in Betrieb genommen und die Anordnung einige Stunden sich selbst überlassen. Erreicht die Temperatur des Wärmetransportmediums einen vorgegebenen Sollwert, so unterbricht ein Bimetallschalter 16 den Heizstromkreis. Die Ansprechtemperatur des Bimetallschalters ist dabei zweckmäßigerweise fest so eingestellt, daß sie einerseits deutlich über den bei Einrichtung einer Erdwärmegewinnungsanlage anzutreffenden Bodentemperaturen liegt, andererseits aber durch die Wirkung der Heizung 13 sicher erreicht werden kann. Geeignet sind anstelle des Bimetallschalters auch andere - gegebenenfalls einen Linearbereich in der Umgebung der Solltemperatur aufweisenden - Temperaturregler.

Die zur Aufrechterhaltung der Übertemperatur notwendige Heizleistung stellt nun ein Maß dar für den Wärmeübergangswiderstand zwischen Erdwärmetauscher und umgebenden Erdreich: ist die zur Aufrechterhaltung der Temperatur notwendige Heizleistung verhältnismäßig groß, so wird der Wärmetauscher im Betrieb gute Eigenschaften aufweisen - ist die aufzubringende Leistung dagegen klein, so wird in dem gewählten Bodenbereich auch wenig Wärme zu entnehmen sein.

Gemessen wird diese Leistung durch einen üblichen Haushaltsstromzähler 17, der kostengünstig erhältlich ist. Zur Auswertung der Messung ist dabei beispielsweise die innerhalb eines vorgegebenen Zeitraums verbrauchte elektrische Energie abzulesen. Andere bevorzugte Meßanordnungen geben direkt die mittlere zugeführte elektrische Leistung aus. Derartige Meßeinrichtungen sind bekannt und brauchen hier nicht näher dargestellt zu werden.

Werden an die Genauigkeit des Meßergebnisses besonders große Anforderungen gestellt, so ist die außerhalb des Erdreichs befindliche Anordnung mit einer thermisch isolierenden Schicht zu umgeben. Für den praktischen Einsatz ist die Meßanordnung zweckmäßigerweise in einem geschlossenen, gegebenenfalls thermisch isolierten Gehäuse 18 aufgebaut, welches über eine entsprechende Anschlußanordnung 19 an seiner Unterseite direkt auf das aus dem Erdboden herausragende Ende des Wärmetauscherelementes aufsteckbar ist.

Die Auswertung des Meßergebnisses erfolgt für alle beschriebenen Ausführungen in der Praxis mittels einer Tabelle, die in Abhängigkeit von Anfangstemperatur und aufgenommener Heizleistung und der während der Heizzeit bestimmten Temperaturen über die Wirksamkeit des gemessenen Elementes Aufschluß gibt. Aus den gewünschten

/10

Leistungsdaten der Gesamtanlage läßt sich daran anschließend direkt Anzahl, Länge und gegenseitiger Abstand der notwendigen zu installierenden Elemente ermitteln.

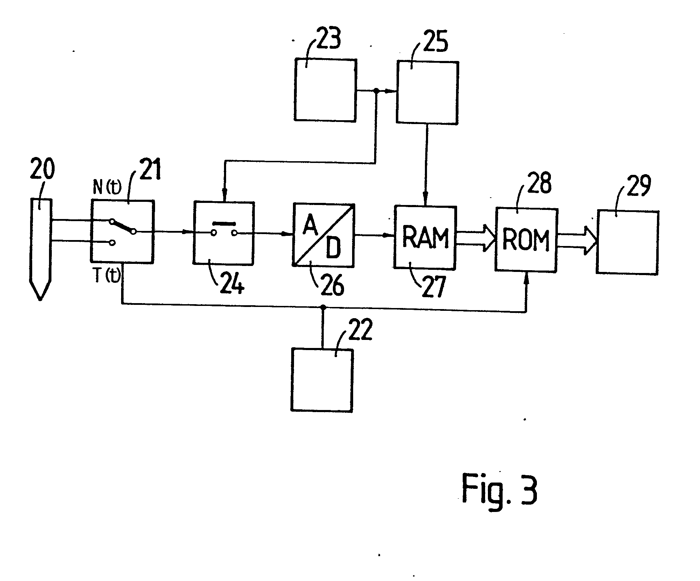

In Figur 3 ist schematisch eine Anordnung zur automatisierten Auswertung der mit der erfindungsgemäßen Meßvorrichtung erzielten Ergebnisse dargestellt. Die wiedergegebene Auswertungsanordnung stellt lediglich eine der möglichen Realisierungen dar und kann auch in programmierter Schaltungstechnik mittels eines Mikroprozessors aufgebaut werden.

Die von einer Meßvorrichtung 20, die im wesentlichen einer solchen gemäß Figur 2 entsprechen kann, ermittelten zeitabhängigen Temperatur- oder Leistungswerte T(t) bzw. t(N) werden in analoger Form einem Umschalter 21 zugeführt, mittels dessen auswählbar ist, ob die Auswertung aufgrund einer fortgesetzten Messung der zur Aufrechterhaltung einer konstanten Temperatur notwendigen Leistung oder aber über den bei konstanter Leistungseinspeisung sich einstellenden Temperaturverlauf erfolgen soll. (Bei der in Figur 2 dargestellten Anordnung wäre der Wert T(t) an der Temperaturmeßvorrichtung 14 direkt und die momentane mittlere Leistung N(t) über eine nicht dargestellte Integrationsvorrichtung, welche an Stelle des Wechselstromzählers 17, einen über einige Schalttakte des Bimetallschalters 16 gemittelten Leistungswert ausgibt, erhältlich.)

Betätigt wird der Umschalter 21 über eine Umschalteinrichtung 22, welche lediglich als Block schematisch dargestellt ist und über einen (nicht dargestellten) Schalter an einem Bedienpult oder dergleichen aktivierbar ist.

Ein Zeitgeber 23 gibt an seinem Ausgang zu festen Zeiten Taktimpulse ab, welche einerseits zu einem Schaltelement 24 gelangen und andererseits einen Adressenzähler 25 jeweils um einen Zählwert voransetzen.

Das Schaltelement 24 läßt, während es durch das Ausgangssignal des Zeitgebers 23 aktiviert ist, das an seinem Eingang anliegende aktuelle analoge Meßsignal zu einem Analog-Digital-Wandler 26 gelangen, wobei der digitalisierte Meßwert bei der durch den Adressenzähler auf denselben Takt hin eingestellten Adresse in einem RAM-Speicher 27 festgehalten wird.

Die in dem Speicher RAM-Speicher 27 festgehaltenen Meßwerte werden - gegebenenfalls nach einer Datenreduktion, d.h. beispielsweise einer Klassifizierung in bestimmte Meßwertstufungen - paralell zur Addressierung eines Festwert(ROM-) Speichers benutzt, wobei der Inhalt des adressierten Speicherplatzes an eine Anzeigeeinheit 29 übertragen und in Form von alphanumerischen Zeichen für die Bedienungsperson sichtbar dargestellt wird. Entsprechend der durch den Umschalter 22 ausgewählten Betriebsart wird im Festwertspeicher 28 ein zugehöriger Speicherbereich festgelegt, aus dem die Auswahl der zu der ermittelten Meßwertfolge bei der eingestellten Betriebsart erfolgt.

Bei der dargestellten Anordnung wird also in Abhängigkeit von einer Anzahl sich im Verlaufe einer Meßzeit einstellenden Werten die Anzeige von Ergebnissen veranlaßt, welche Aufschluß über das Wärmeübertragungsvermögen des eingebrachten Wärmetauscherelementes und das Wärmespeichervermögen des umgebenden Bodenbereiches geben. Die Ergebniswerte repräsentieren dabei jeweils einen zeitabhängigen Verlauf der Meßwerte, wobei zu jeder möglichen Wertefolge ein anzuzeigendes Ergebnis gespeichert ist. Bei auszuschließenden Wertefolgen wird eine Fehleranzeige veranlaßt. Die Zuordnung der Anzeigewerte zu Folgen von Meßwerten (d.h. die Programmierung des Festwertspeichers) erfolgt dabei zweckmäßig empirisch aufgrund vorhandener Erfahrungen.

Das Meßverfahren ist unabhängig vom Typ des benutzten Wärmetauscherelementes verwendbar. Bei gleichartigen Bodenbedingungen lassen sich damit auch Vergleichsuntersuchungen betreffend die Wirksamkeit unterschiedlicher Typen von Wärmetauscherelementen ohne besonderen Aufwand durchführen.

* * * * *

Patentansprüche


1. Meßanordnung zum Ermitteln der Wirksamkeit eines zur Erdwärmegewinnung im Erdreich angeordneten Wärmetauscherelements, gekennzeichnet durch eine in das Außenrohr (1, 1') des Wärmetauscherelementes einschiebbare oder eingeschobene, in einem Abstand von dem Außenrohr geführte elektrische Heizvorrichtung (2), mindestens einen von der Heizvorrichtung thermisch getrennten Temperaturmeßfühler (5, 6) und eine Anzeige- oder Registriervorrichtung (9) für die Temperatur.


2. Meßanordnung nach Anspruch 1, dadurch gekennzeichnet, daß die Heizvorrichtung (2) sich nahezu oder vollständig über die gesamte Länge des Wärmetauscherelements erstreckt.


3. Meßanordnung nach einem der vorangehenden Ansprüche, dadurch gekennzeichnet, daß der Temperaturmeßfühler (5, 6) im Mittelbereich der Längserstreckung der Heizvorrichtung (2) angeordnet ist.


4. Meßanordnung nach einem der vorangehenden Ansprüche, dadurch gekennzeichnet, daß der Temperaturmeßfühler (5, 6) derart angeordnet ist, daß er sich während der Messung im Bereich der Wandung des Außenrohres (1) befindet.

5. Meßanordnung nach Anspruch 4, d a d u r c h g e - k e n n z e i c h n e t , daß der Temperaturmeßfühler (5, 6) an einem die Heizvorrichtung in einer zentralen Position haltenden Führungselement (3, 4) befestigt ist.

6. Meßanordnung nach Anspruch 5, d a d u r c h g e - k e n n z e i c h n e t , daß das Führungselement (3, 4) zwei aufeinanderfolgende Bereiche des Außenrohres (1) in vertikaler Richtung trennt.

7. Meßanordnung nach einem der vorangehenden Ansprüche, d a d u r c h g e k e n n z e i c h n e t , daß der Temperaturmeßfühler (6) mit einer aus dem Außenrohr (1) herausragenden Meßlatte (10) verbunden ist, welche in ihrer Länge derjenigen des Wärmetauscherelements entspricht und eine Teilung aufweist, die, bezogen auf die Oberkante des Außenrohres (1), eine Aussage über den Ort des Temperaturmeßfühlers ermöglicht.

8. Meßanordnung insbesondere nach einem der vorangehen- den Ansprüche, g e k e n n z e i c h n e t d u r c h

einen mit einer Anschlußanordnung (19) für das Wärmetauscherelement verbundenen abgeschlossenen Kreislauf mit einer Umwälzpumpe (12) für das Wärmetransportmedium,

eine in dem Kreislauf angeordnete elektrische Heizvorrichtung (13), für das Wärmetransportmedium und eine mit dem Wärmetransportmedium in thermischem Kontakt befindliche Temperaturanzeigevorrichtung (14).

9. Meßanordnung nach Anspruch 8, g e k e n n z e i c h - n e t   d u r c h   eine mit dem Wärmetransportmedium in thermischem Kontakt befindliche, bei einer vorgegebenen, oberhalb der Erdtemperatur liegenden Temperatur ansprechenden Abschalt- oder Regelvorrichtung (16) für die Heizvorrichtung (13).

10. Meßanordnung nach Anspruch 9, d a d u r c h   g e - k e n n z e i c h n e t ,   daß die Abschaltvorrichtung (16) aus einem Bimetallschalter besteht.

11. Meßanordnung nach einem der vorangehenden Ansprüche, d a d u r c h   g e k e n n z e i c h n e t ,   daß ein eine thermische Isolierung aufweisendes Gehäuse 18 für den außerhalb des Erdreichs befindlichen Teil der Meßvorrichtung vorgesehen ist.

12. Meßanordnung nach einem der vorangehenden Ansprüche, d a d u r c h   g e k e n n z e i c h n e t ,   daß eine Meß- und Anzeigevorrichtung (17) für die der Heizvorrichtung zugeführte Leistung oder Energie vorgesehen ist.

13. Meßanordnung nach Anspruch 12, d a d u r c h   g e - k e n n z e i c h n e t ,   daß die Meß- und Anzeigevorrichtung (17) für die zugeführte Energie bei einer elektrischen Heizvorrichtung aus einem Haushaltsstromzähler besteht.

14. Meßanordnung nach einem der vorangehenden Ansprüche, d a d u r c h   g e k e n n z e i c h n e t ,   daß der Meßvorrichtung (17) eine Auswertungseinrichtung (Fig. 3) für die zu vorgegebenen Zeiten aufgenommenen Meßwerte in der Weise nachgeschaltet ist, daß ein erster Speicher (27) für die Folge von Meßwerten vorgesehen sind, in denen Meßwerten entsprechende Signale festgehalten werden und daß die Folge von Meßwerten entsprechenden Signalen mindestens mittelbar ein Adress-Signal für einen zweiten Speicher (28) bilden, das ein Auswahlkriterium für ein anzuzeigendes Ergebnissignal darstellt, wobei die Ergebnissignale bei den durch das Adress-Signal bezeichneten Adressen in dem zweiten Speicher (28) vorgegeben sind.

15. Meßanordnung nach Anspruch 14, d a d u r c h   g e -  k e n n z e i c h n e t ,   daß eine Betriebsartumschaltung (22) vorgesehen ist, welche mit der Betätigung einer Umschaltvorrichtung (21) auf verschiedene Arten von Meßeingangssignalen ein zusätzliches Adress Signal erzeugt, das entsprechend den Meßeingangssignalen unterschiedliche Gruppen von Ergebnissignalen im Speicher (28) auswählt.

* * * * *

0047224

Fig.1

Fig. 2

0047224

Fig. 3

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 414 736 (THE RHEOSTATIC CY. LTD.)  <br> * Einführung; Seite 3, Absatz 3 - Seite 4, Absatz 1; Figuren 1, 2 * | 1,8,9, 12 |
| | GB - A - 1 053 551 (C.U.R.A. PATENTS LTD.) <br> * Einführung; Seite 3, Zeile 47 - Seite 4, Zeile 19; Figur 1 * | 1,8,9, 12 |
| A | DE - A - 2 550 251 (WERNER & PFLEIDERER) <br> * Figur 1; Spalte 6, Zeilen 36-68 * | 7 |
| A | CH - A - 225 192 (A. STEINEMANN) <br> * Figur 1; Seite 2, Zeilen 31-90 * | 1,13 |

**KLASSIFIKATION DER ANMELDUNG (Int. Cl.³)**

G 01 K 17/06

**RECHERCHIERTE SACHGEBIETE (Int. Cl.³)**

G 01 K 17/06
   17/08
   17/10
F 24 J 3/00
   3/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-11-1981 | VISSER |

EPA form 1503.1 06.78